# EUROPEAN PATENT APPLICATION

(11) **EP 2 787 731 A2**
(43) Date of publication of application: **08.10.2014**
(21) Application number: 14162066.6
(22) Date of filing: 27.03.2014
(51) Int. Cl.: H04N 9/31

(54) **Image projection device and input object detection method**

(30) Priority: 05.04.2013 JP 2013079712
(71) Applicant: Funai Electric Co., Ltd., Daito-shi, Osaka 574-0013 (JP)
(72) Inventor: Nishioka, Ken, Daito-shi, Osaka 574-0013 (JP)
(74) Representative: Global IP Europe Patentanwaltskanzlei

(57) **Abstract**

An image projection device includes a projection component, a photodetector, and a determination component. The projection component is configured to project an image by scanning light beams two-dimensionally. The photodetector is configured to detect reflected lights obtained in response to the light beams being reflected by a reflecting object. The determination component is configured to determine whether or not the reflecting object is an input object based on whether or not a difference of light detection positions of the light beams is at least a specific value. The light detection positions are indicative of irradiation positions of the light beams in a projection region of the image, respectively.

## Description

### CROSS-REFERENCE TO RELATED APPLICATIONS

This application claims priority to Japanese Patent Application No. 2013-079712 filed on April 5, 2013. The entire disclosure of Japanese Patent Application No. 2013-079712 is hereby incorporated herein by reference.

### BACKGROUND

### Field of the Invention

This invention generally relates to an image projection device and an input object detection method.

### Background Information

Conventionally, a projector for detecting input with a finger or other such input object is well-known in the art (see Japanese Unexamined Patent Application Publication No. 2009-258569 (Patent Literature 1), for example).

For example, with the conventional projector, an infrared laser is emitted from a light source. The infrared laser is scanned by part of a projector scanning means that projects a two-dimensional image, and is made parallel to the projection surface by reflection at a reflecting mirror. When the projected image is then touched by a finger, the infrared laser reflected by the finger is incident on a photodiode. The distance of the finger is measured by TOF (Time of Flight) method by a range finding means.

### SUMMARY

It has been discovered that with the conventional projector, if an object other than a finger is located on the projection surface, and the object is tall enough to reflect the infrared laser, then the object is mistakenly detected as a finger.

One aspect is to provide an image projection device with which it is less likely that an object other than an input object is mistakenly detected as an input object.

In view of the state of the known technology, an image projection device is provided that includes a projection component, a photodetector, and a determination component. The projection component is configured to project an image by scanning light beams two-dimensionally. The photodetector is configured to detect reflected lights obtained in response to the light beams being reflected by a reflecting object. The determination component is configured to determine whether or not the reflecting object is an input object based on whether or not a difference of light detection positions of the light beams is at least a specific value. The light detection positions are indicative of irradiation positions of the light beams in a projection region of the image, respectively.

Also other objects, features, aspects and advantages of the present disclosure will become apparent to those skilled in the art from the following detailed description, which, taken in conjunction with the annexed drawings, discloses one embodiment of the image projection device and the input object detection method.

### BRIEF DESCRIPTION OF THE DRAWINGS

Referring now to the attached drawings which form a part of this original disclosure:
FIG. 1 is a perspective view of a projector in accordance a first embodiment;
FIG. 2 is a block diagram of the projector illustrated in FIG. 1;
FIG. 3 is a top plan view of the projector illustrated in FIG. 1, illustrating how an image is projected by the projector;
FIG. 4 is a perspective view of the projector illustrated in FIG. 1, illustrating detection of a reflected laser light with the projector;
FIG. 5 is a cross sectional view of photodetectors of the projector illustrated in FIG. 1;
FIG. 6 is an exploded perspective view of the photodetector illustrated in FIG. 5;
FIG. 7 is a schematic diagram illustrating a detection range of the photodetectors illustrated in FIG. 5;
FIG. 8 is a flowchart of an input object detection processing of the projector;
FIG. 9 is a schematic diagram illustrating a detection processing when an input object is located in a projection region of the projector;
FIG. 10 is a schematic diagram illustrating the detection processing when an object other than the input object is located in the projection region of the projector;
FIG. 11 is a top plan view of a projector in accordance with a second embodiment, illustrating how an image is projected by the projector;
FIG. 12 is a block diagram of the projector illustrated in FIG. 11;
FIG. 13 is a top plan view of a projector in accordance with a third embodiment, illustrating how an image is projected by the projector;
FIG. 14 is a flowchart of an image projection processing of the projector illustrated in FIG. 13;
FIG. 15 is a top plan view of a projector in accordance with a fourth embodiment, illustrating an input object detection processing of the projector; and
FIG. 16 is a flowchart of an input object detection processing of the projector illustrated in FIG. 15.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

### FIRST EMBODIMENT

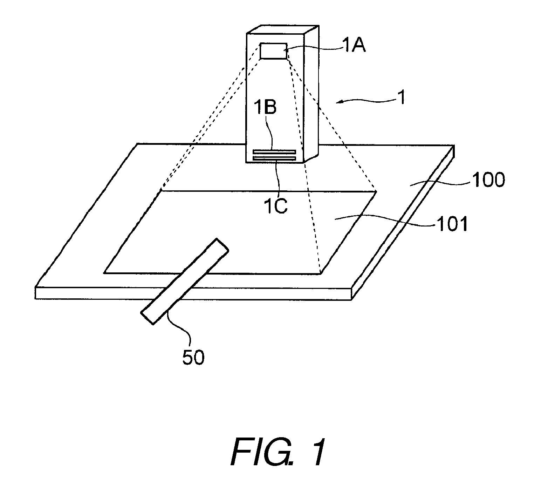

Referring initially to FIG. 1, a projector 1 (e.g., an image projection device) is illustrated in accordance with a first embodiment. FIG. 1 is a perspective view of the projector 1.

As shown in FIG. 1, the projector 1 is installed on a table or other such screen 100, and projects a projected image 101 onto the projection surface (the top face) of the screen 100 by scanning a laser light. The projected image 101 is projected by shining the laser light on the screen 100 from a window 1A provided to the housing of the projector 1.

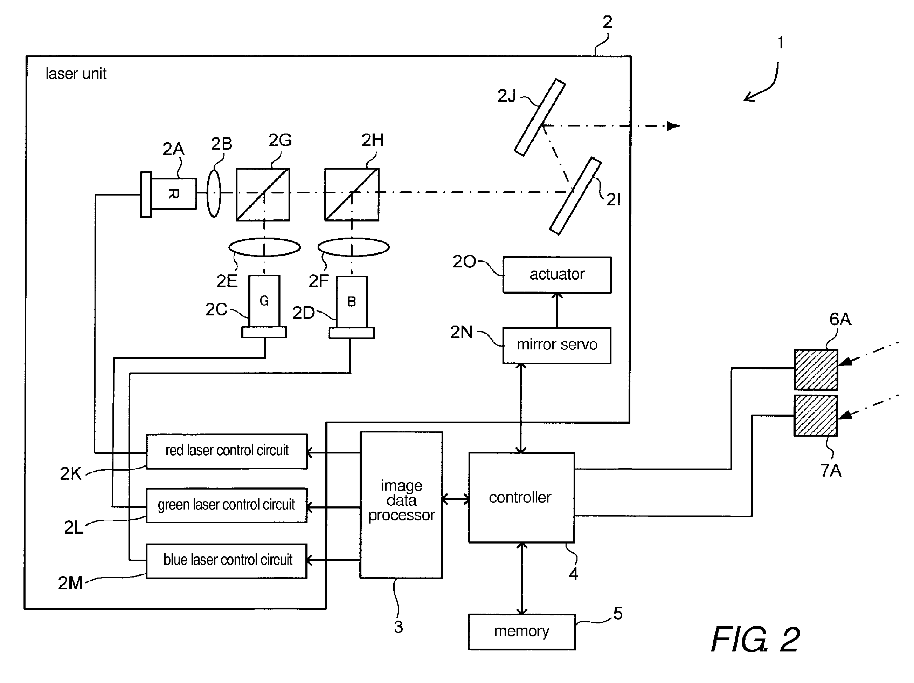

As shown in FIG. 1, when a touch pen 50 (e.g., an input object) touches part of the projected image 101, then the laser light is scattered and reflected by the touch pen 50, and is incident inside the housing through windows 1B and 1C provided at different heights at the lower part of the housing of the projector 1. The incident laser light is received by a pair of photodetectors 6 and 7 (see FIG. 2) inside the housing, which detects a touch by the touch pen 50. Specifically, the projector 1 functions as a virtual input interface.

The input object is not limited to the touch pen 50. If the projected image 101 is touched with a finger, for example, then the laser light is also scattered and reflected by the finger. As a result, a touch by the finger can also be detected.

FIG. 2 is a block diagram of the internal configuration of the housing of the projector 1. As shown in FIG. 2, the projector 1 includes a laser unit 2 (e.g., a projection component) that outputs a visible laser light (e.g., a laser beam), an image data processor 3, a controller 4 (e.g., a determination component), and a memory 5. The projector 1 also includes the photodetectors 6 and 7.

The laser unit 2 includes a red LD (Laser Diode) 2A, a collimator lens 2B, a green LD 2C, a blue LD 2D, collimator lenses 2E and 2F, beam splitters 2G and 2H, a horizontal MEMS (Micro Electro Mechanical System) mirror 2I, a vertical MEMS mirror 2J, a red laser control circuit 2K, a green laser control circuit 2L, a blue laser control circuit 2M, a mirror servo 2N, and an actuator 20.

The red LD 2A emits a red laser light at a power level controlled by the red laser control circuit 2K. The red laser light thus emitted is made into a parallel beam by the collimator lens 2B, is transmitted through the beam splitters 2G and 2H, and heads toward the horizontal MEMS mirror 2I.

The green LD 2C emits a green laser light at a power level controlled by the green laser control circuit 2L. The green laser light thus emitted is made into a parallel beam by the collimator lens 2E, is reflected by beam splitter 2G, is transmitted through the beam splitter 2H, and heads toward the horizontal MEMS mirror 2I.

The blue LD 2D emits a blue laser light at a power level controlled by the blue laser control circuit 2M. The blue laser light thus emitted is made into a parallel beam by the collimator lens 2F, is reflected by the beam splitter 2H, and heads toward the horizontal MEMS mirror 2I.

The laser light incident on and reflected by the horizontal MEMS mirror 2I. The horizontal MEMS mirror 2I deflects the laser light so that it scans in the horizontal direction. Then, the laser light is incident on and reflected by the vertical MEMS mirror 2J. The vertical MEMS mirror 2J deflects the laser light so that it scans in the vertical direction. Then, the laser light is emitted to the outside through the window 1A in the housing of the projector 1, as shown in FIG. 1.

The deflection by the horizontal MEMS mirror 2I and the vertical MEMS mirror 2J causes the visible laser light, such as a color composite laser light, emitted from the laser unit 2 to be scanned two-dimensionally.

Image data is stored in the memory 5. The memory 5 can be a ROM, for example, so that the image data is stored in the ROM. The memory 5 can also be a rewritable flash memory, for example, so that image data inputted from outside the projector 1 is stored in the flash memory.

The image data read by the controller 4 from the memory 5 is converted by the image data processor 3 into data for three colors, namely, red (R), green (G), and blue (B). Then, the converted data is sent to the red laser control circuit 2K, the green laser control circuit 2L, and the blue laser control circuit 2M, respectively.

In the illustrated embodiment, the controller 4 can includes a microcomputer or processor that controls various parts of the projector 1 as discussed below. The controller 4 can also include other conventional components such as an input interface circuit, an output interface circuit, and storage devices such as a ROM (Read Only Memory) device and a RAM (Random Access Memory) device. The microcomputer of the controller 4 is programmed to control the various parts of the projector. The storage devices store processing results and control programs. Specifically, the internal RAM stores statuses of operational flags and various control data. The internal ROM stores the programs for various operations. The controller 4 is capable of selectively controlling various parts of the projector 1 in accordance with the control program. It will be apparent to those skilled in the art from this disclosure that the precise structure and algorithms for controller 4 can be any combination of hardware and software that will carry out the functions of the present invention.

The mirror servo 2N deflects or drives the horizontal MEMS mirror 2I by driving the actuator 20 according to a horizontal synchronization signal from the controller 4. The mirror servo 2N also deflects or drives the vertical MEMS mirror 2J by driving the actuator 20 according to a vertical synchronization signal from the controller 4.

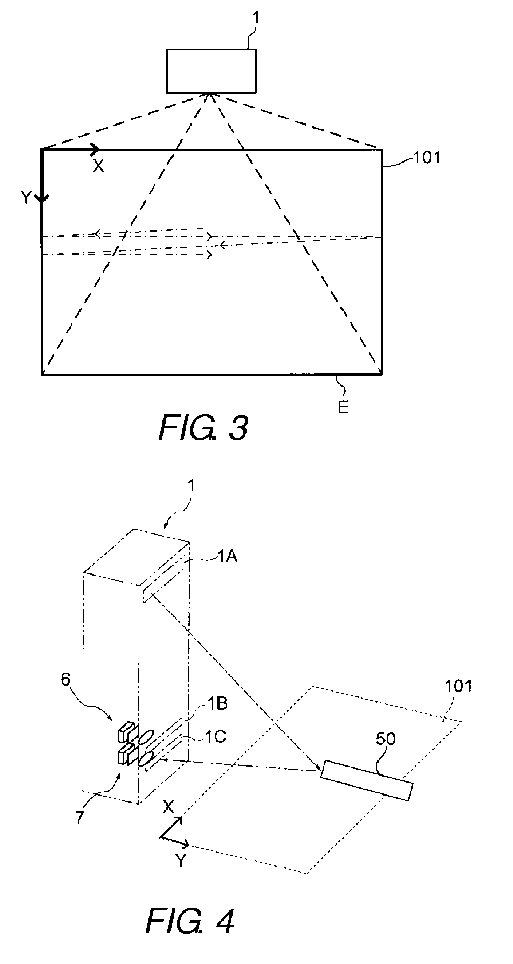

The horizontal synchronization signal is a sawtooth wave signal, for example. The vertical synchronization signal is a stair-step signal, for example. FIG. 3 shows how the laser light is two-dimensionally scanned when these synchronization signals are used. FIG. 3 is a top plan view of the projector 1.

In FIG. 3, the coordinate origin is located at one corner of the projection region of the projected image 101 by the projector 1. Then, the X axis is in the horizontal direction, and the Y axis is in the vertical direction (the same applies to the coordinates in subsequent Figures). As shown by the path of the one-dot chain line in FIG. 3, the laser light emitted from the projector 1 is scanned horizontally (along the X axis) while the position in the vertical direction (along the Y axis) is fixed. Once the horizontal scanning is finished, then the beam is scanned diagonally back to the starting position in the horizontal direction but displaced in the vertical direction, and another horizontal scan is commenced. This scanning is repeated to form one frame of the projected image 101.

As shown in FIG. 4, when the user touches part of the projected image 101 with the touch pen 50, the visible laser light emitted from the window 1A is scattered and reflected by the touch pen 50, and the reflected laser light is incident on the windows 1B and 1C. As shown in FIG. 4, the photodetector 6 is disposed corresponding to the window 1B, while the photodetector 7 is disposed corresponding to the window 1C. The photodetectors 6 and 7 are disposed inside the housing of the projector 1.

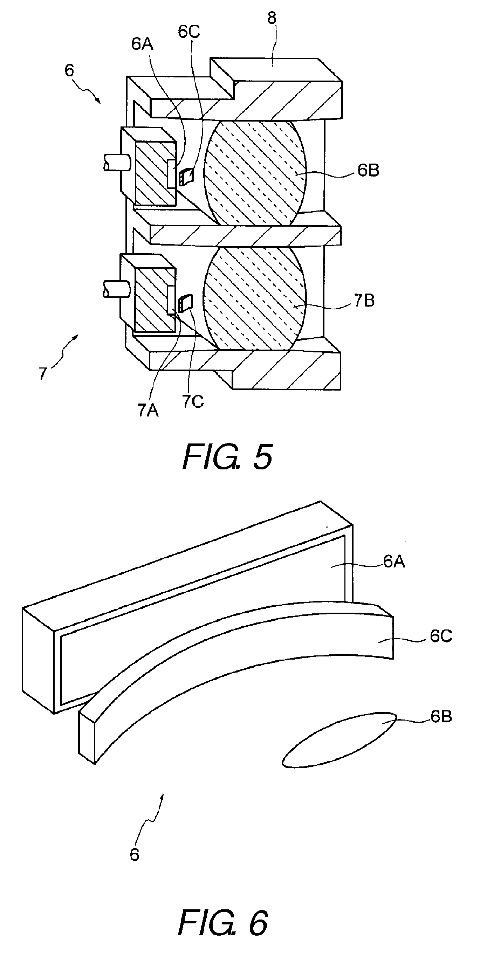

FIG. 5 shows the specific configuration of the photodetectors 6 and 7. As shown in FIG. 5, the photodetectors 6 and 7 are mounted to a case 8 that is built into the projector 1, at different heights corresponding to the windows 1B and 1C.

The photodetector 6 is used to detect whether or not an object located in the projected image 101 is the touch pen 50 or another such input object. The photodetector 6 includes a light receiving element 6A, a conversing lens 6B, and a flat masking member 6C. The light receiving element 6A detects irradiation by a reflected laser light. The converging lens 6B converges the reflected laser light incident from the window 1B and guides it to the light receiving element 6A. The flat masking member 6C is disposed between the light receiving element 6A and the converging lens 6B. The flat masking member 6C is tall enough to cover the lower part of the light receiving element 6A.

The photodetector 7 is used to detect a touch of the projected image 101 by the touch pen 50 or another such input object. The photodetector 7 is similar to the photodetector 6 in that it includes a light receiving element 7A, a converging lens 7B, and a flat masking member 7C. The conversing lens 7B converges the reflected laser light incident from the window 1C and guides it to the light receiving element 7A. The flat masking member 7C is disposed between the light receiving element 7A and the converging lens 7B. The flat masking member 7C is tall enough to cover the lower part of the light receiving element 7A.

As shown in FIG. 2, the light receiving elements 6A and 7A are each connected to the controller 4. The detection signals are sent from the light receiving elements 6A and 7A to the controller 4.

FIG. 6 is an exploded perspective view of the photodetector 6. The photodetector 7 is configured the same as the photodetector 6. Thus, detailed description of the photodetector 7 will be omitted for the sake of brevity. The masking members 6C and 7C both have the same shape. The masking members 6C and 7C have a width in the width direction (X direction) of the projected image 101 corresponding to the width of the light receiving elements 6A and 7A in this direction. As shown by the photodetector 6 in FIG. 6, the masking member 6C has a curved shape such that its two ends approach the converging lens 6B side relative to the center. The masking member 6C blocks reflected laser light according to the incident angle onto the light receiving element 6A so that irradiation of the light receiving element 6A is restricted.

The spot of the reflected laser light is converged by the conversing lens 6B on the light receiving element 6A. However, generally, the spot of the reflected laser light from the ends of the projected image 101 becomes larger in diameter than the spot of the reflected laser light from the center of the projected image 101. Therefore, it is possible that what is supposed to be blocked by the masking member is not entirely be blocked because of an increase in spot diameter, and the light is instead received by the light receiving element 6A. This leads to false detection. In view of this, in the illustrated embodiment, the masking member 6C has a curved shape. Thus, the reflected laser light at the ends, which has a larger spot diameter, can be blocked while the spot diameter is small.

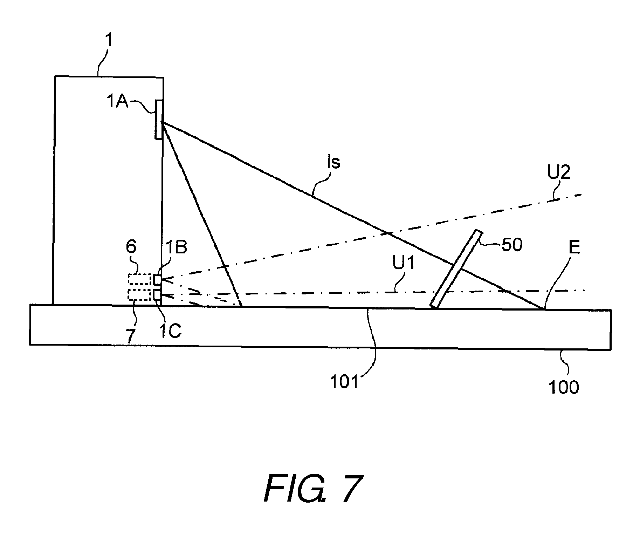

The detection ranges of the photodetectors 6 and 7 can be adjusted by adjusting the dimensions of the masking members 6C and 7C. An example of setting the detection ranges of the photodetectors 6 and 7 is indicated by the one-dot chain line in FIG. 7. As shown in FIG. 7, the upper limit U1 of the detection range of the photodetector 7 located at the lower level is substantially parallel to the projection surface in order to detect a touch of the projected image 101 by the touch pen 50 or other such input object.

Also, the upper limit U2 of the detection range of the photodetector 6 located at the upper level broadens so as to move away from the projection surface (in a direction perpendicular to the projection surface) as the distance from the projector 1 becomes larger in the vertical direction (the Y direction) of the projected image 101. Thus, the reflected laser light, obtained when the laser light ls scanning the outer peripheral part E (see FIG. 3 as well) is reflected by the input object, such as the touch pen 50, can be detected. In the illustrated embodiment, as shown in FIG. 3, the outer peripheral part E is located on the side of the projection region of the projected image 101 that extends in the horizontal direction (the X direction) on the far side from the projector 1. It is also possible for the upper limit U2 of the detection range of the photodetector 6 to be substantially parallel to the projection surface, just as with the photodetector 7. In the illustrated embodiment, the upper limit U2 or the detection range of the photodetector 6 can be calculated or detected by the controller 4 based on the orientation of the photodetector 6 relative to the projector 1, or be stored in the memory 5 in advance.

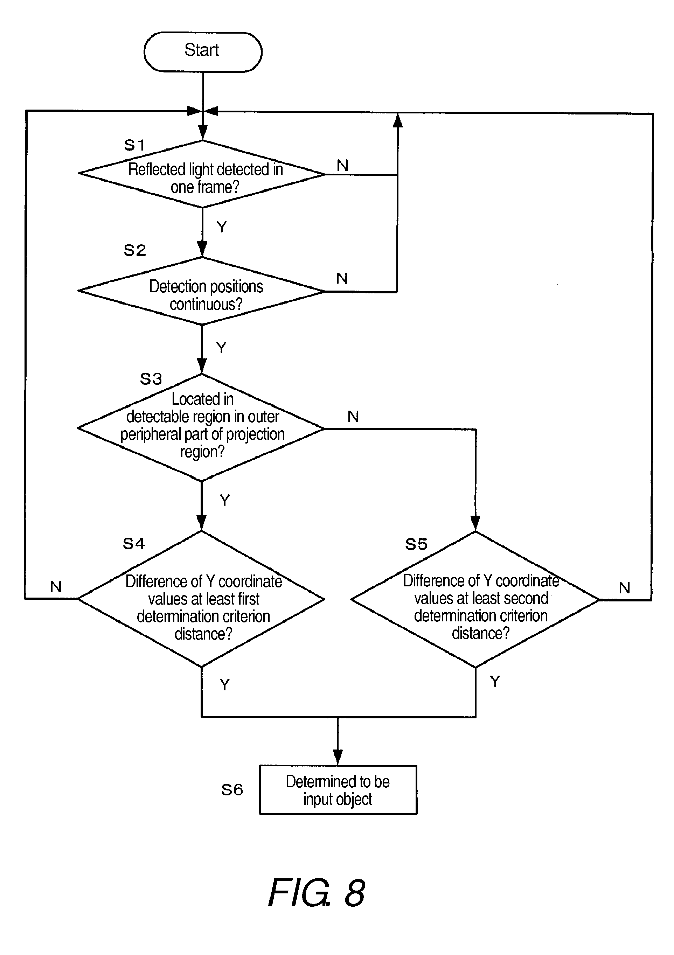

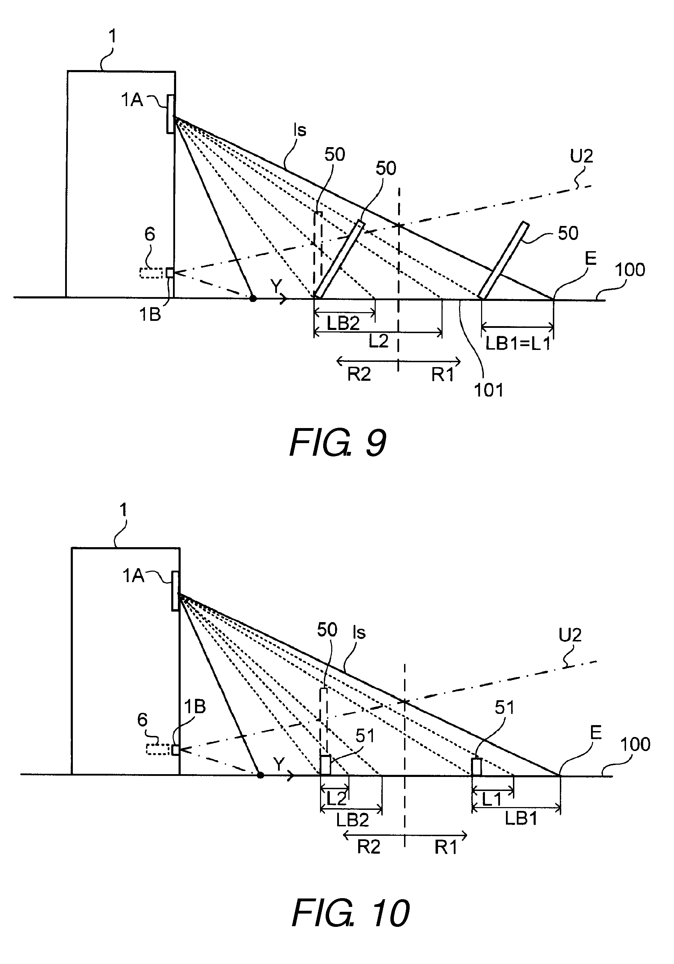

Next, the processing for determining whether or not an object located on the projected image 101 of the projector 1 is the input object will be described through reference to FIGS. 8 to 10. In FIGS. 9 and 10, the window 1C and the photodetector 7 used for touch detection are not illustrated, for the sake of clarity.

When the processing of the flowchart shown in FIG. 8 is commenced, first, in step S1, the controller 4 (see FIG. 2) determines whether or not the photodetector 6 has detected reflected laser light as a result of one frame of image being projected by the scanning of the laser light. Specifically, it is detected whether a reflecting object is located in the projected image 101. If no reflected laser light is detected (No in step S1), then the flow returns to step S1.

On the other hand, if reflected laser light is detected in one frame (Yes in step S1), then the flow proceeds to step S2. The controller 4 determines the light detection positions based on the detection signal from the photodetector 6 and the horizontal and vertical synchronization signals. The "light detection position" here means the irradiation position in the projected image 101 (or the projection region) of the laser light that is the origin of the reflected laser light that is detected, and is expressed by X and Y coordinate values.

In step S2, the controller 4 determines whether or not the determined light detection positions are continuous in the one frame, that is, whether or not the light detection positions form a group. If they are not continuous (No in step S2), then the flow returns to step S1. On the other hand, if the light detection positions are continuous (Yes in step S2), then the flow proceeds to step S3. Here, in the illustrated embodiment, the controller 4 can determine whether or not the light detection positions are continuously arranged in the one frame by determining whether or not the distance between each of adjacent pairs of the light detection positions is smaller than a predetermined threshold. For example, this threshold is set based on the line spacing of the lines of the laser light forming the projected image 101, such as two times of the line spacing and the like. Of course, this this threshold can be set in a different manner as needed and/or desired. If the controller 4 determines that the distance between each of the adjacent pairs of the light detection positions is smaller than the threshold, then the controller 4 determines that the light detection positions are continuously arranged in the one frame. Otherwise, the controller 4 determines that the light detection positions are not continuously arranged in the one frame or the light detection positions are arranged to form a plurality of groups that are spaced apart from each other.

As shown in FIG. 9, a region R1 is a region in which reflected laser light can be detected by the photodetector 6 when the laser light ls is reflected by a reflecting object. Specifically, the region R1 extends in a direction in which the Y coordinate value moves away from the projector 1 relative to a Y coordinate value of a place where the upper limit U2 of the detection range of the photodetector 6 intersects the path of the laser light ls scanning the outer peripheral part E of the projected image 101. Specifically, the region R1 is a detectable region in the outer peripheral part of the projection region. If the Y coordinate value is a positive value (i.e., the value increases moving to the right in FIG. 9), then the region R1 is a region in which the Y coordinate value is larger than the Y coordinate value of the above-mentioned place of intersection (hereinafter referred to as a boundary Y coordinate value). In the following description, the Y coordinate value is assumed to be a positive value.

Meanwhile, as shown in FIG. 9, a region R2 is a region in which reflected laser light cannot be detected by the photodetector 6 because it is outside the detection range of the photodetector 6 even when the laser light ls is reflected by a reflecting object. Specifically, the region R2 extends in a direction in which the Y coordinate value moves closer to the projector 1 relative to the boundary Y coordinate value. The region R2 is a region in which the Y coordinate value is smaller than the boundary Y coordinate value.

In step S3, the controller 4 determines whether or not the distal end (or the lower end, for example) of the detected reflecting object is located in the region R1. More specifically, the controller 4 determines whether or not the smallest (e.g., minimum) of the Y coordinate values of the determined light detection positions is greater than the boundary Y coordinate value. If it is greater, then the controller 4 determines the location to be in the region R1.

If the location is determined to be in the region R1 (Yes in step S3), then the flow proceeds to step S4. In step S4, the controller 4 determines whether or not a detection distance L1 (e.g., a difference) is at least a first determination criterion distance LB1 (e.g., a specific value). The detection distance L1 is calculated by the controller 4 as the difference between the smallest and largest (e.g., the minimum and maximum) of the Y coordinate values for the light detection positions. The first determination criterion distance LB1 is calculated by the controller 4 as the difference between the Y coordinate value of the outer peripheral part E of the projection region and the smallest Y coordinate value of the light detection positions. If the detection distance L1 is at least the first determination criterion distance LB1 (Yes in step S4), then it is determined that the detected reflecting object is a touch pen or other such input object (step S6). Otherwise (No in step S4), the reflecting object is determined not to be an input object, and the flow returns to step S1.

In FIG. 9, for example, the reflecting object is the touch pen 50, and the detection distance L1 is equal to the first determination criterion distance LB1. Thus, the reflecting object is determined to be an input object. On the other hand, in FIG. 10, the reflecting object is an object 51 other than an input object, and the detection distance L1 is less than the first determination criterion distance LB1. Thus, the reflecting object is determined not to be an input object.

Meanwhile, in step S3, if the distal end of the detected reflecting object is located in the region R2 (No in step S3), then the flow proceeds to step S5.

In step S5, the controller 4 determines whether or not a detection distance L2 (e.g., a difference) is at least a second determination criterion distance LB2 (e.g., a specific value). The detection distance L2 is calculated by the controller 4 as the difference between the smallest and largest of the Y coordinate values for the light detection positions. The second determination criterion distance LB2 is calculated by the controller 4 as the difference between the smallest of the Y coordinate values of the light detection positions and the largest of the Y coordinate values of the light detection positions that is detected when an input object is disposed perpendicular to the projection surface at the distal end position of the detected reflecting object. In other words, as shown in FIG. 9, the second determination criterion distance LB2 is the difference between the smallest of the Y coordinate values of the light detection positions and a Y coordinate value of an irradiation position of a light beam that passes through an intersection between an imaginary line passing through the distal end portion of the reflecting object and the upper limit U2 (e.g., the detection range) of the photodetector 6. In FIG. 9, a case is shown in which the touch pen 50 indicated by the broken line is disposed perpendicular to the projection surface. If the detection distance L2 is at least the second determination criterion distance LB2 (Yes in step S5), then it is determined that the detected reflecting object is a touch pen or other such input object (step S6). Otherwise (No in step S5), the reflecting object is determined not to be an input object, and the flow returns to step S1.

In FIG. 9, for example, the reflecting object is the touch pen 50, and the detection distance L2 is greater than the second determination criterion distance LB2. Thus, the reflecting object is determined to be an input object. On the other hand, in FIG. 10, the reflecting object is an object 51 other than an input object, and the detection distance L2 is less than the second determination criterion distance LB2. Thus, the reflecting object is determined not to be an input object.

Thus, it is determined whether or not the reflecting object is an input object. If the reflecting object is an input object, then it is further determined that the projected image 101 is touched by the input object in response to the reflected laser light being detected by the photodetector 7.

As discussed above, the projector 1 includes the laser unit 2, the photodetector 6, and the controller 4. The laser unit 2 projects an image by two-dimensionally scanning a visible light beam. The photodetector 6 detects reflected light obtained when the visible light beam is reflected by a reflecting object. The controller 4 determines whether or not the reflecting object is an input object depending on whether or not the difference between the coordinate values of the light detection positions is at least a specific value (e.g., the first determination criterion distance or the second determination criterion distance).

Consequently, if the input object, such as the touch pen 50 or the like, inserted from outside the projection region is located in the projection region, then the difference of the coordinate values of the light detection positions is at least the specific value (e.g., the first determination criterion distance or the second determination criterion distance), and this object can be identified as an input object. If, however, a reflecting object other than an input object (the object 51 in FIG. 10, etc.) is located in the projection region, then the difference of the coordinate values of the light detection positions is less than the specific value, and the reflecting object is determined not to be an input object. Therefore, it is less likely that an object other than an input object is mistakenly detected as an input object.

Also, in this embodiment, the controller 4 changes the above-mentioned specific value to the first determination criterion distance or the second determination criterion distance according to whether or not the light detection position is in the region R1. The region R1 is a region where reflected light of a light beam scanning the outer peripheral part E of the projection region is detected by the photodetector 6.

Consequently, even if the detection range of the photodetector 6 is made smaller, it is still be possible to determine that a reflecting object located in the region R2, where the outer peripheral part E of the projection region cannot be detected, is an input object. Also, since the photodetector 6 can be moved closer to the projection region, the projector 1 can be more compact.

### SECOND EMBODIMENT

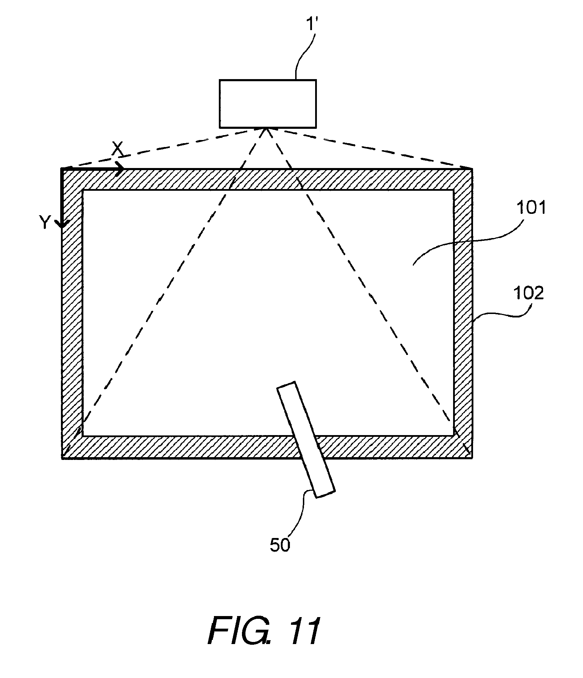

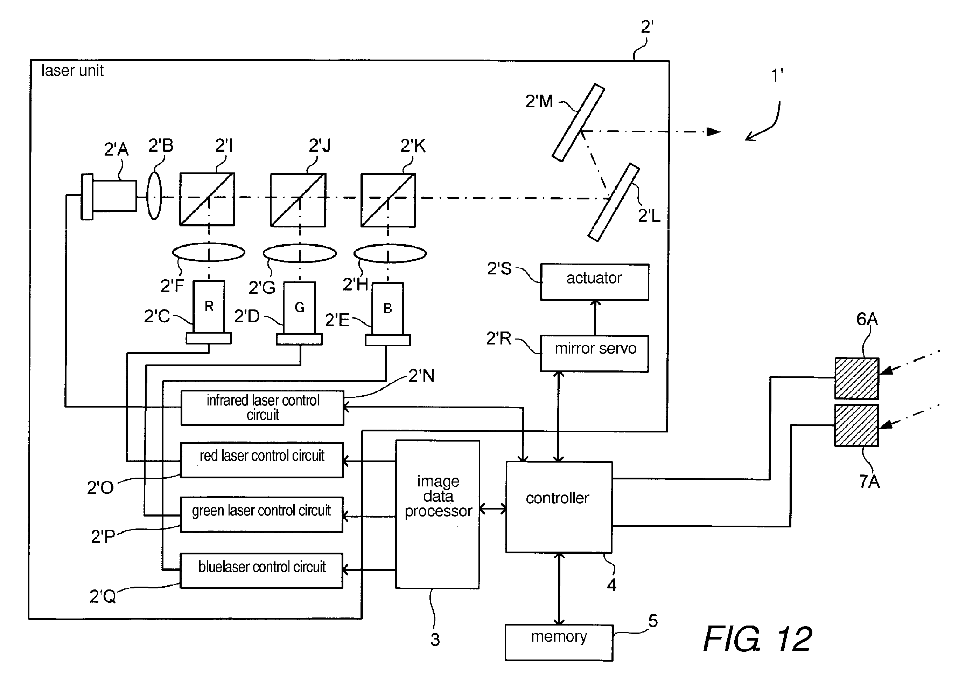

Referring now to FIGS. 11 and 12, a projector 1' in accordance with a second embodiment will now be explained. In view of the similarity between the first and second embodiments, the parts of the second embodiment that are functionally identical to the parts of the first embodiment will be given the same reference numerals as the parts of the first embodiment. Moreover, the descriptions of the parts of the second embodiment that are functionally identical to the parts of the first embodiment may be omitted for the sake of brevity.

In the first embodiment above, visible laser light is reflected by an input object and the reflected light is detected. Generally, if part of the projected image is black, then detection of the reflected black light from part of the input object located in the region R1 need to be sensitive. If the reflected black light is not detected, then the light detection positions can be determined not to be continuous (step S2 in FIG. 8), or the detection distance L1 can be detected to be smaller than the first determination criterion distance LB1 (step S4 in FIG. 8). This results in that the object is not be determined to be an input obj ect.

In view of this, with the projector 1' in accordance with the second embodiment, the input object is reliably detected even in this case. In particular, with the projector 1', as shown in FIG. 11, a detection-use image 102 (shown with hatching in FIG. 11) is projected around the outer periphery of the projected image 101 by visible laser light. Thus, the entire projected image including the projected image 101 and the detection-use image 102 is projected by the laser light emitted and two-dimensionally scanned from the projector 1' in accordance with this embodiment.

FIG. 12 is a block diagram of the configuration of the projector 1'. The projector 1' differs from the projector 1 in accordance with the first embodiment (see FIG. 2) in that the projector 1' includes a laser unit 2' that outputs an infrared laser light. The laser unit 2' includes an infrared LD 2'A, a collimator lens 2'B, a red LD 2'C, a green LD 2'D, a blue LD 2'E, collimator lenses 2'F to 2'H, beam splitters 2'I to 2'K, a horizontal MEMS mirror 2'L, a vertical MEMS mirror 2'M, an infrared laser control circuit 2'N, a red laser control circuit 2'O, a green laser control circuit 2'P, a blue laser control circuit 2'Q, a mirror servo 2'R, and an actuator 2'S.

The infrared LD 2'A emits an infrared laser light at a power level controlled by the infrared laser control circuit 2'N. The infrared laser light thus emitted is made into a parallel beam by the collimator lens 2'B, is transmitted through the beam splitters 2'I, 2'J and 2'K, and heads toward the horizontal MEMS mirror 2'L.

The red LD 2'C emits a red laser light at a power level controlled by the red laser control circuit 2'O. The red laser light thus emitted is made into a parallel beam by the collimator lens 2'F, is reflected by the beam splitters 2'I, is transmitted through the beam splitters 2'J and 2'K, and heads toward the horizontal MEMS mirror 2'L.

The green LD 2'D emits a green laser light at a power level controlled by the green laser control circuit 2'P. The green laser light thus emitted is made into a parallel beam by the collimator lens 2'G, is reflected by beam splitter 2'J, is transmitted through the beam splitter 2'K, and heads toward the horizontal MEMS mirror 2'L.

The blue LD 2'E emits a blue laser light at a power level controlled by the blue laser control circuit 2'Q. The blue laser light thus emitted is made into a parallel beam by the collimator lens 2'H, is reflected by beam splitter 2'K, and heads toward the horizontal MEMS mirror 2'L.

The laser light is incident on and reflected by the horizontal MEMS mirror 2'L. The horizontal MEMS mirror 2'L deflects the laser light so that it scans in the horizontal direction. Then, the laser light is incident on and reflected by the vertical MEMS mirror 2'M. The vertical MEMS mirror 2'M deflects the laser light so that it scans in the vertical direction. Then, the laser light is emitted to the outside through a window in the housing of the projector 1'.

When the projected image 101 is projected, the infrared LD 2'A is extinguished, and a visible laser light that is color composite light produced by the red LD 2'C, the green LD 2'D, and the blue LD 2'E is scanned. The extinguishing of the infrared LD 2'A reduces power consumption. When the detection-use image 102 is projected, the red LD 2'C, the green LD 2'D, and the blue LD 2'E are extinguished, and the infrared laser light produced by the infrared LD 2'A is scanned.

The processing for determining an input object by the projector 1' in this embodiment is the same as the processing in the first embodiment (FIG. 8), except that the controller 4 processing the entire projected image with the projected image 101 and the detection-use image 102 as one frame.

In addition to this, in this embodiment, the controller 4 determines that the reflecting object is an input object if the light detection positions detected by the photodetector 6 are included in the detection-use image 102. Even if part of the projected image 101 produced by the visible laser light is black and the reflected light from part of the input object cannot be detected, the infrared laser light projecting the detection-use image 102 can still be reflected by the input object and be reliably detected. Therefore, the input object can be detected more accurately.

When the infrared laser light is used for projecting the detection-use image 102 as above, the user cannot see the detection-use image 102 because it is non-visible light. However, a visible laser light can also be used for projecting the detection-use image 102. In this case, the visible light projecting the detection-use image 102 can be reflected by the reflecting object and reliably detected if the detection-use image 102 is all one color, such as white or red.

Also, in this case, no component will be needed to output infrared light. Thus, the same components as in the first embodiment (see FIG. 2) can be used, for example, and the cost can be kept lower.

As mentioned-above, the laser unit 2' projects the detection-use image 102 with the infrared laser light around the projected image 101 projected with the visible light beam.

There can be cases in which the projected image 101 projected with the visible light beam is black and the reflected light cannot be detected from part of the reflecting object. However, even if this happens, the reflected light from the reflecting object can be reliably detected by using the detection-use image 102 projected around the projected image 101. Therefore, it can be reliably determined that the reflecting object is an input obj ect.

### THIRD EMBODIMENT

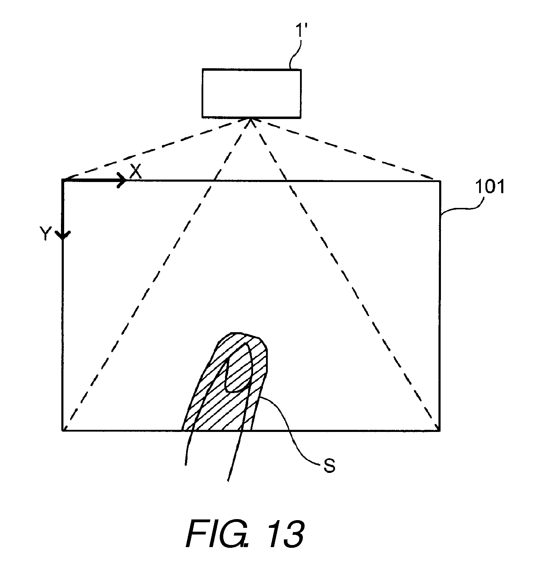

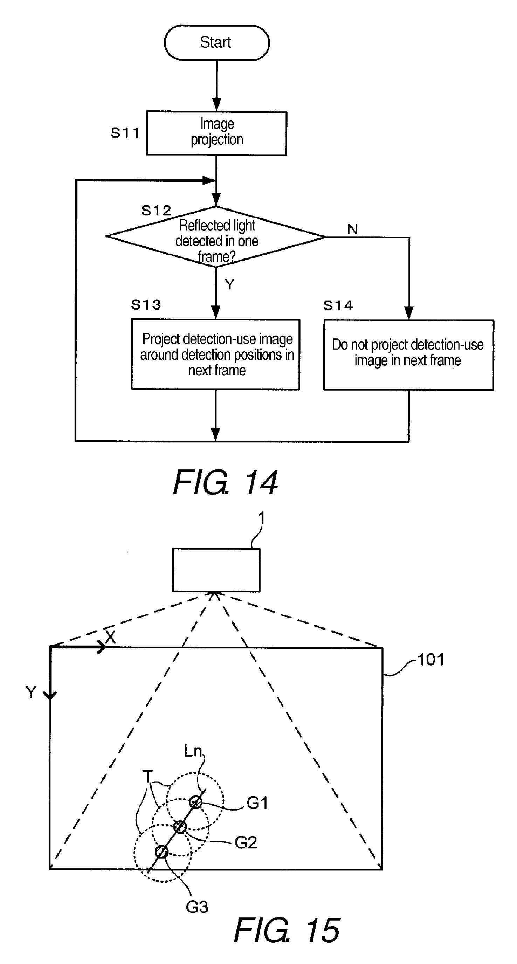

Referring now to FIGS. 13 and 14, a projector 1' in accordance with a third embodiment will now be explained. In view of the similarity between the first, second and third embodiments, the parts of the third embodiment that are functionally identical to the parts of the first and second embodiments will be given the same reference numerals as the parts of the first and second embodiments. Moreover, the descriptions of the parts of the third embodiment that are functionally identical to the parts of the first and second embodiments may be omitted for the sake of brevity.

In this embodiment, the projector 1' in accordance with the third embodiment includes the same configuration as with the projector 1' in the second embodiment (see FIG. 12). The image projection processing in accordance with the third embodiment will be described through reference to FIGS. 13 and 14.

When the processing of the flowchart shown in FIG. 14 is commenced, first, in step S11, the projector 1' projects one frame of the projected image 101 (see FIG. 13) with a visible laser light, such as a color composite light. Then, in step S12, the controller 4 determines whether or not reflected laser light is detected by the photodetector 6 as a result of the one frame of image projection.

If the reflected laser light is detected (Yes in step S12), then the flow proceeds to step S13. In step S13, when the next frame of the projected image 101 is projected with the visible laser light under the control of the controller 4, a detection-use image with an infrared laser light is projected in the region surrounding the light detection positions of the reflected laser light. The detection-use image with the infrared laser light is produced by the infrared LD 2'A.

In the illustrated embodiment, as shown in FIG. 13, the detection-use image with the infrared laser light is projected in a region S that surrounds the light detection positions of the reflected laser light reflected by a finger (e.g., an input object). The same applies when the input object is a touch pen.

After step S 13, the flow returns to step S 12. In step S 12, if the reflected laser light is not detected in one frame (No in step S12), then the flow proceeds to step S14. In step S14, in the projection of the next frame of the image, no detection-use image is projected, and projection is performed with ordinary visible laser light. In the illustrated embodiment, step S11 of the image projection processing shown in FIG. 14 can be commenced prior to step S1 of the processing shown in FIG. 8, and step S12 can be performed instead of step S1 of the processing shown in FIG. 8. Furthermore, step S13 can be performed prior to step S2 of the processing shown in FIG. 8 in response to the controller 4 determining that the the reflected laser light is detected in one frame (Yes in step S12), while step S14 can be performed in response to the controller 4 determining that the reflected laser light is not detected in one frame (No in step S12).

In this embodiment, the same processing as in the first embodiment (see FIG. 8) is performed as the input object detection processing. Even when part of the projected image 101 is black in the projection of one frame with the ordinary visible light, and the reflected light is not detected at part of the reflecting object, the detection-use image is projected with the infrared light so as to surround the reflecting object in the projection of the next frame. Since the infrared light is reflected by the reflecting object and reliably detected by the photodetector 6, the input object can be properly detected by detection processing of the input object.

In this embodiment, the detection-use image can also be projected using the visible laser light. In this case, the detection-use image can be projected in one color, such as white or red. Also, in this case, no component is needed to output infrared light. Thus, the cost can be kept lower.

With this projector 1', as a result of the projected image 101 being projected by the laser unit 2' with the visible light beam, the laser unit 2' projects the detection-use image with the infrared laser light in a region (e.g., the region S in FIG. 13, for example) surrounding the obtained light detection position.

Therefore, although there can be cases when part of the projected image 101 projected with the visible light beam is black and the reflected light cannot be detected at part of the reflecting object, even in such a case, the detection-use image is projected with the infrared laser light in a region surrounding the reflecting object. Thus, the reflected light from the reflecting object can be reliably detected. Therefore, it can be reliably determined that the reflecting object is an input object.

### FOURTH EMBODIMENT

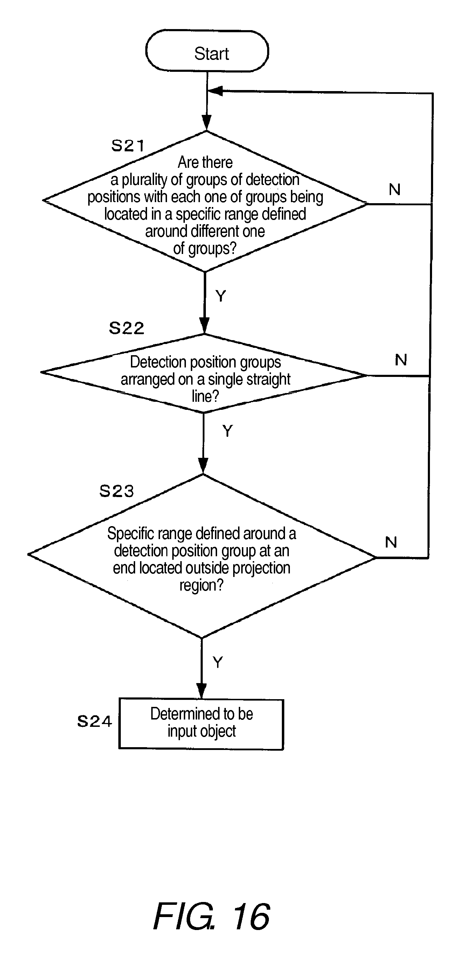

Referring now to FIGS. 15 and 16, a projector 1 in accordance with a fourth embodiment will now be explained. In view of the similarity between the first, second, third and fourth embodiments, the parts of the fourth embodiment that are functionally identical to the parts of the first to third embodiments will be given the same reference numerals as the parts of the first to third embodiment. Moreover, the descriptions of the parts of the fourth embodiment that are functionally identical to the parts of the first to third embodiments may be omitted for the sake of brevity.

In this embodiment, the projected image 101 (see FIG. 15) is projected by two-dimensionally scanning a visible laser light using a projector 1 that is basically identical to the projector 1 (see FIG. 2) in accordance with the first embodiment. The same processing as in the first embodiment (see FIG. 8) is performed as input object detection processing.

When part of the projected image 101 is projected black, the reflected laser light is not detected at part of the reflecting object. If this happens, the light detection positions can be determined not to be continuous (step S2) in the processing shown in FIG. 8, and the input object cannot properly be detected. Specifically, as shown in FIG. 8, if the light detection positions are determined not to be continuous (No in step S2), then the processing returns to step S1.

In view of this, with the projector 1 in accordance with the fourth embodiment, the input object detection processing shown in FIG. 16 is also performed. In the illustrated embodiment, this input object detection processing shown in FIG. 16 is commenced in response to the controller 4 determining that the light detection positions are not continuous (No in step S2 in FIG. 8). In the flowchart shown in FIG. 16, first, in step S21, the controller 4 determines whether or not there are a plurality of light detection position groups such that one light detection position group is at least partially located within a specific range that includes another light detection position group, based on the light detection positions determined as a result of projecting one frame of the projected image 101. If there are a plurality of such groups (Yes in step S21), then the flow proceeds to step S22. Otherwise (No in step S21), the flow returns to step S21.

For example, as shown in FIG. 15, the plurality of light detection position groups are the groups G1 to G3. The group G2 is at least partially located within a specific range T that includes another group G1, and the group G3 is at least partially located within a specific range T that includes another group G2. Thus, in this case, the flow proceeds to step S22. In FIG. 15, the specific range T is a circular region with a specific radius and centering on a representative point in the light detection position group. However, the specific range is not limited to this. Also, a group can be formed of just one light detection position.

In step S22, the controller 4 determines whether or not the plurality of light detection position groups determined in step S21 are at least partially arranged along a single straight line. If they are arranged along a single straight line (Yes in step S22), then the flow proceeds to step S23. Otherwise (No in step S22), the flow returns to step S21.

In the example in FIG. 15, the groups G1 to G3 are arranged in a straight line Ln. Thus, the flow proceeds to step S23.

In step S23, the controller 4 determines whether or not the specific range including one of the groups that is located at the end out of the plurality of light detection position groups is located outside the projection region of the projected image 101. If the location is outside the projection region (Yes in step S23), then the flow proceeds to step S24 and the controller 4 determines that the reflecting object is an input object. Otherwise (No in step S23), the flow returns to step S21.

In the example in FIG. 15, the specific range T including the group G3 located at the end is located outside the projection region. Thus, it is determined that the reflecting object is an input object.

In the illustrated embodiment, the controller 4 determines that the reflecting object is an input object if, as a result of the projected image 101 being projected by the laser unit 2 with a visible light beam, there are a plurality of groups of obtained light detection positions (such as the groups G1 to G3 in FIG. 15), one group is located in the specific range that includes another group, and the specific range including the group that is located at the end out of the plurality of groups is located outside the projection region.

Consequently, although there can be cases when part of the projected image 101 projected with a visible light beam is black and light cannot be detected at part of the reflecting object, even in such a case, the reflecting object can be determined to be an input object because of the plurality of groups of light detection positions.

Also, in this embodiment, the controller 4 determines the reflecting object to be an input object if the plurality of groups are arranged on the single straight line. Consequently, it is possible to detect the input object having a linear shape, such as a touch pen or a finger. This makes it less likely that reflecting objects other than the input obj ect that have a curved shape are mistakenly detected.

In the illustrated embodiments, the projector 1 or 1' (e.g., the image projection device) includes the laser unit 2 or 2' (e.g., the projection component), the photodetector 6, and the controller 4 (e.g., the determination component). The laser unit 2 or 2' is configured to project the projected image 101 (e.g., the image) by scanning laser lights (e.g., the light beams) two-dimensionally. The photodetector 6 is configured to detect the reflected lights obtained in response to the laser lights being reflected by the reflecting object. The controller 4 is configured to determine whether or not the reflecting object is an input object, such as the touch pen 50, based on whether or not the difference L1 or L2 of the light detection positions of the laser lights is at least the distance LB1 or LB2 (e.g., the specific value). The light detection positions are indicative of irradiation positions of the laser lights in the projection region of the projected image 101, respectively.

With this configuration, if the reflecting object inserted into the projection region from outside the projection region is located in the projection region, then the difference L1 or L2 of the coordinate values of the light detection positions is at least the distance LB1 or LB2. Thus, this reflecting object can be identified as the input object. On the other hand, if the reflecting object other than the input object is located in the projection region, then the difference L1 or L2 of the coordinate values of the light detection positions is less than the distance LB1 or LB2. Thus, the reflecting object can be determined not to be the input object. Therefore, it is less likely that the reflecting object other than the input object will be mistakenly detected as the input object.

Also, in the illustrated embodiments, the determination component is configured to change the distance LB1 or LB2 based on whether or not at least one of the light detection positions is located in the region R1 in which a reflected light of the laser light that scans the outer peripheral part E of the projection region is detected by the photodetector 6.

With this configuration, even if the detection range of the photodetector 6 is made smaller, it will still be possible to determine that the reflecting object located in the region R2 where the outer peripheral part E of the projection region cannot be detected is the input object. Also, since the photodetector 6 can be moved closer to the projection region, the projector 1 or 1' (e.g., the image projection device) can be more compact.

Also, in the above configuration, the laser unit 2 or 2' is configured to project the projected image 101 with the visible light beam. The laser unit 2 or 2' is further configured to project the detection-use image 102 with the specific light beam around the projected image 101.

With this configuration, there can be situations when part of the projected image 101 projected by the visible light beam is black and light cannot be detected in part of the reflecting object. However, even if that happens, the reflected light from the reflecting object can still be reliably detected by using the detection-use image 102 projected by the specific light beam around the image produced by the visible light beam. Therefore, it can be reliably determined that the reflecting object is the input object.

Also, in the above configuration, the laser unit 2 or 2' is configured to project the projected image 101 with the visible light beam. The laser unit 2 or 2' is further configured to project project the detection-use image with the specific light beam in the region S around the light detection positions.

With this configuration, there can be situations when part of the projected image 101 projected by the visible light beam is black and light cannot be detected in part of the reflecting object. However, even if that happens, the reflected light from the reflecting object can still be reliably detected since the detection-use image is projected by the specific light beam in the region S that surrounds the reflecting object. Therefore, it can be reliably determined that the reflecting object is the input object.

Also, in the above configuration, the specific light beam can include the non-visible light beam. With this configuration, since the detection-use image is projected by the non-visible light beam, it will have no effect on how the image produced by the visible light beam looks.

Also, in the above configuration, the specific light beam can include the visible light beam. With this configuration, since no component is needed for outputting the non-visible light beam, the cost can be kept lower.

Also, the controller 4 is further configured to determine that the reflecting object is the input object in response to determining that there are a plurality of groups G1, G2 and G3 of the light detection positions with each one of the groups G1, G2 and G3 being at least partially located within the specific range T that is defined around different one of the groups G1, G2 and G3, and that the specific range T defined around the group G3 that is located at end of the groups G1, G2 and G3 is at least partially located outside the projection region of the projected image 101.

With this configuration, there can be situations when part of the image projected by the visible light beam is black and light cannot be detected in part of the reflecting object. However, even if that happens, it can still be determined from the plurality of the groups G1, G2 and G3 of the light detection positions that the reflecting object is the input object.

Also, in the above configuration, the controller 4 is further configured to determine that the reflecting object is the input object in response to determining that the groups G1, G2 and G3 are arranged along a single straight line Ln. With this configuration, it will be possible to detect the input object having a linear shape, such as a touch pen or a finger, making it less likely that the reflecting object other than the input object with a curved shape will be mistakenly detected.

In the illustrated embodiments, the controller 4 is further configured to determine whether or not the light detection positions are continuously arranged in the projection region. The controller 4 is further configured to determine whether or not the difference L1 or L2 of the light detection positions is at least the distance LB1 or LB2 in response to determining that the light detection positions are continuously arranged in the projection region.

In the illustrated embodiments, the controller 4 is further configured to determine that the reflecting object is the input object in response to the difference L1 or L2 of the light detection positions is at least the distance LB1 or LB2.

In the illustrated embodiments, the controller 4 is further configured to calculate the difference L1 or L2 of the light detection positions by calculating a difference between the minimum and maximum Y coordinate values of the light detection positions.

In the illustrated embodiments, the controller 4 is further configured to calculate the distance LB1 by calculating a difference between the minimum Y coordinate value of the light detection positions and the coordinate value of the outer peripheral part E of the projection region.

In the illustrated embodiments, the controller 4 is further configured to calculate the distance LB2 by calculating a difference between the minimum Y coordinate value of the light detection positions and the coordinate value of the irradiation position of the laser light that passes through the intersection between the imaginary line (the touch pen 50 illustrated with the dotted line in FIGS 9 and 10) passing through the distal end of the reflecting object 50 or 51 and the upper limit U2 of the detection range of the photodetector 6.

Also, in the illustrated embodiments, the input object detection method includes scanning laser lights (e.g., the light beams) two-dimensionally to project the projected image 101, detecting reflected lights obtained in response to the light beams being reflected by a reflecting object, and determining whether or not the reflecting object is an input object, such as the touch pen 50, based on whether or not the difference L1 or L2 of the light detection positions of the laser lights is at least the distance LB1 or LB2 (e.g., the specific value). The light detection positions are indicative of irradiation positions of the laser lights in the projection region of the projected image 101, respectively.

Also, the above configuration can further includes determining whether or not at least one of the light detection positions is located in the region R1 in which a reflected light of the laser light that scans the outer peripheral part E of the projection region is detected, and changing the distance LB1 or LB2 based on whether or not the at least one of the light detection positions is located in the region R1.

With the present invention, it is less likely that an object other than an input obj ect will be mistakenly detected as an input obj ect.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "frame facing side", "non-frame facing side", "forward", "rearward", "front", "rear", "up", "down", "above", "below", "upward", "downward", "top", "bottom", " side", "vertical", "horizontal", "perpendicular" and "transverse" as well as any other similar directional terms refer to those directions of an image projection device in an upright position. Accordingly, these directional terms, as utilized to describe the image projection device should be interpreted relative to an image projection device in an upright position on a horizontal surface.

Also it will be understood that although the terms "first" and "second" can be used herein to describe various components these components should not be limited by these terms. These terms are only used to distinguish one component from another. Thus, for example, a first component discussed above could be termed a second component and vice-a-versa without departing from the teachings of the present invention. The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. An image projection device comprising:
a projection component configured to project an image by scanning light beams two-dimensionally;
a photodetector configured to detect reflected lights obtained in response to the light beams being reflected by a reflecting object; and
a determination component configured to determine whether or not the reflecting object is an input object based on whether or not a difference of light detection positions of the light beams is at least a specific value, with the light detection positions being indicative of irradiation positions of the light beams in a projection region of the image, respectively.

2. The image projection device according to claim 1, wherein
the determination component is configured to change the specific value based on whether or not at least one of the light detection positions is located in a region in which a reflected light of a light beam that scans an outer peripheral part of the projection region is detected by the photodetector.

3. The image projection device according to claim 1 or 2, wherein
the projection component is configured to project the image with a visible light beam, the projection component being further configured to project a detection-use image with a specific light beam around the image.

4. The image projection device according to claim 1 or 2, wherein
the projection component is configured to project the image with a visible light beam, the projection component being further configured to project a detection-use image with a specific light beam in a region around the light detection positions.

5. The image projection device according to claim 3 or 4, wherein
the specific light beam includes a non-visible light beam.

6. The image projection device according to claim 3, 4 or 5, wherein
the specific light beam includes a visible light beam.

7. The image projection device according to any one of claims 1 to 6, wherein
the determination component is further configured to determine that the reflecting object is the input object in response to determining that there are a plurality of groups of the light detection positions with each one of the groups being at least partially located within a specific range that is defined around different one of the groups, and that the specific range defined around one of the groups that is located at an end of the groups is at least partially located outside the projection region.

8. The image projection device according to any one of claims 1 to 7, wherein
the determination component is further configured to determine that the reflecting object is the input object in response to determining that the groups of the light detection positions are arranged along a single straight line.

9. The image projection device according to any one of claims 1 to 8, wherein
the determination component is further configured to determine whether or not the light detection positions are continuously arranged in the projection region, and
the determination component being further configured to determine whether or not the difference of the light detection positions is at least the specific value in response to determining that the light detection positions are continuously arranged in the projection region.

10. The image projection device according to any one of claims 1 to 9, wherein
the determination component is further configured to determine that the reflecting object is the input object in response to the difference of the light detection positions is at least the specific value.

11. The image projection device according to any one of claims 1 to 10, wherein
the determination component is further configured to calculate the difference of the light detection positions by calculating a difference between minimum and maximum coordinate values of the light detection positions.

12. The image projection device according to any one of claims 1 to 11, wherein
the determination component is further configured to calculate the specific value by calculating a difference between a minimum coordinate value of the light detection positions and a coordinate value of an outer peripheral part of the projection region.

13. The image projection device according to any one of claims 1 to 11, wherein
the determination component is further configured to calculate the specific value by calculating a difference between a minimum coordinate value of the light detection positions and a coordinate value of an irradiation position of a light beam that passes through an intersection between an imaginary line passing through a distal end of the reflecting object and a detection range of the photodetector.

14. An input object detection method comprising:
scanning light beams two-dimensionally to project an image;
detecting reflected lights obtained in response to the light beams being reflected by a reflecting obj ect; and
determining whether or not the reflecting object is an input object based on whether or not a difference of light detection positions of the light beams is at least a specific value, with the light detection positions being indicative of irradiation positions of the light beams in a projection region of the image, respectively.

15. The input object detection method according to claim 14, further comprising
determining whether or not at least one of the light detection positions is located in a region in which a reflected light of a light beam that scans an outer peripheral part of the projection region is detected, and
changing the specific value based on whether or not the at least one of the light detection positions is located in the region.
